# EUROPEAN PATENT APPLICATION

(11) **EP 4 535 859 A1**
(43) Date of publication of application: **09.04.2025**
(21) Application number: 23818807.2
(22) Date of filing: 04.04.2023
(51) Int. Cl.: H04W 28/08

(54) **TRANSMISSION POLICY CONFIGURATION METHOD AND SYSTEM, AND STORAGE MEDIUM**

(30) Priority: 07.06.2022 CN 202210633223
(71) Applicant: ZTE Corporation, Shenzhen, Guangdong 518057 (CN)
(72) Inventor: HU, Ting, Shenzhen, Guangdong 518057 (CN)
(74) Representative: Savi, Massimiliano
(86) International application number: PCT/CN2023/086325
(87) International publication number: WO 2023/236639

(57) **Abstract**

The present application provides a transmission policy configuration method and system, and a storage medium. The transmission policy configuration method comprises: obtaining a subscription transmission policy of a UE (S110); obtaining load prediction information of a target cell, the target cell being a cell where the UE is currently located (S120); adjusting the subscription transmission policy to a target transmission policy according to the load prediction information of the target cell (S130); and controlling, according to the target transmission policy, the UE to perform data transmission (S140).

## Description

### CROSS-REFERENCE TO RELATED APPLICATION

This application is filed on the basis of Chinese patent application No. 202210633223.6 filed June 7, 2022, and claims priority to the Chinese patent application, the entire contents of which are incorporated herein by reference.

### TECHNICAL FIELD

The present disclosure relates to, but not limited to, the field of communication, and more particularly, to a transmission policy configuration method and system, and a storage medium.

### BACKGROUND

Background Data Transfer (BDT) is a feature that allows third-party service providers to transfer data to a specific geographic area during periods of low activity, while also accommodating high bit rates to minimize costs. According to the provisions of related protocols, when a User Equipment (UE) initiates a BDT transmission, a Policy Control Function (PCF) can select a BDT policy according to network performance data, and deliver the BDT policy to a User Plane Function (UPF), and the UPF controls, according to the BDT policy, the UE to perform the BDT transmission. However, the related protocols do not specify how to adjust the BDT policy based on network performance data, resulting in reduced policy flexibility.

### SUMMARY

Embodiments of the present disclosure provide a transmission policy configuration method and system, and a storage medium.

In accordance with a first aspect of the present disclosure, an embodiment provides a transmission policy configuration method, including: acquiring a subscription transmission policy of a UE; acquiring load prediction information of a target cell, where the target cell is a cell where the UE is currently located; adjusting the subscription transmission policy to a target transmission policy according to the load prediction information of the target cell; and controlling, according to the target transmission policy, the UE to perform data transmission.

In accordance with a second aspect of the present disclosure, an embodiment provides a transmission policy configuration system, including: a memory, a processor, and a computer program stored in the memory and executable by the processor, where the computer program, when executed by the processor, causes the processor to perform the transmission policy configuration method in accordance with the first aspect.

In accordance with a third aspect of the present disclosure, an embodiment provides a computer-readable storage medium, storing a computer-executable instruction which, when executed by a processor, causes the processor to perform the transmission policy configuration method in accordance with the first aspect.

### BRIEF DESCRIPTION OF DRAWINGS

FIG. 1 is a flowchart of a transmission policy configuration method according to an embodiment of the present disclosure;
FIG. 2 is a flowchart of acquiring load prediction information according to another embodiment of the present disclosure;
FIG. 3 is a flowchart of generating a local cell load list according to another embodiment of the present disclosure;
FIG. 4 is a flowchart of acquiring load prediction information from the local cell load list according to another embodiment of the present disclosure;
FIG. 5 is a flowchart of updating the local cell load list according to another embodiment of the present disclosure;
FIG. 6 is a flowchart of applying a target transmission policy according to another embodiment of the present disclosure;
FIG. 7 is a flowchart of updating the transmission policy according to another embodiment of the present disclosure;
FIG. 8 is a flowchart of updating the transmission policy after a cell handover according to another embodiment of the present disclosure;
FIG. 9 is a flowchart of determining a transmission policy according to another embodiment of the present disclosure;
FIG. 10 is a flowchart of Example One according to another embodiment of the present disclosure;
FIG. 11 is a flowchart of Example Two according to another embodiment of the present disclosure;
FIG. 12 is a flowchart of Example Three according to another embodiment of the present disclosure;
FIG. 13 is a flowchart of Example Four according to another embodiment of the present disclosure; and
FIG. 14 is a block diagram of a transmission policy configuration system according to another embodiment of the present disclosure.

### DETAILED DESCRIPTION

To make the purposes, technical schemes, and advantages of the present disclosure clear, the present disclosure is described in further detail in conjunction with accompanying drawings and examples. It should be understood that the specific embodiments described herein are intended to illustrate the present disclosure and are not intended to limit the scope of the present disclosure.

It is to be noted, although functional modules have been divided in the schematic diagrams of apparatuses and logical orders have been shown in the flowcharts, in some cases, the modules may be divided in a different manner, or the steps shown or described may be executed in an order different from the orders as shown in the flowcharts. The terms such as "first", "second" and the like in the description, the claims, and the accompanying drawings are used to distinguish similar purposes, and are not necessarily used to describe a specific sequence or a precedence order.

The present disclosure provides a transmission policy configuration method and system, and a storage medium. The transmission policy configuration method includes: acquiring a subscription transmission policy of a UE; acquiring load prediction information of a target cell, where the target cell is a cell where the UE is currently located; adjusting the subscription transmission policy to a target transmission policy according to the load prediction information of the target cell; and controlling, according to the target transmission policy, the UE to perform data transmission. According to the technical scheme of this embodiment, the transmission policy can be adjusted according to the load prediction information of the cell to prevent the UE from performing high-bandwidth data transmission in a high-load cell, thereby improving the flexibility of the transmission policy and balancing the load of base stations of different cells.

The technical schemes of the embodiments of the present disclosure will be described in further detail below in conjunction with the accompanying drawings.

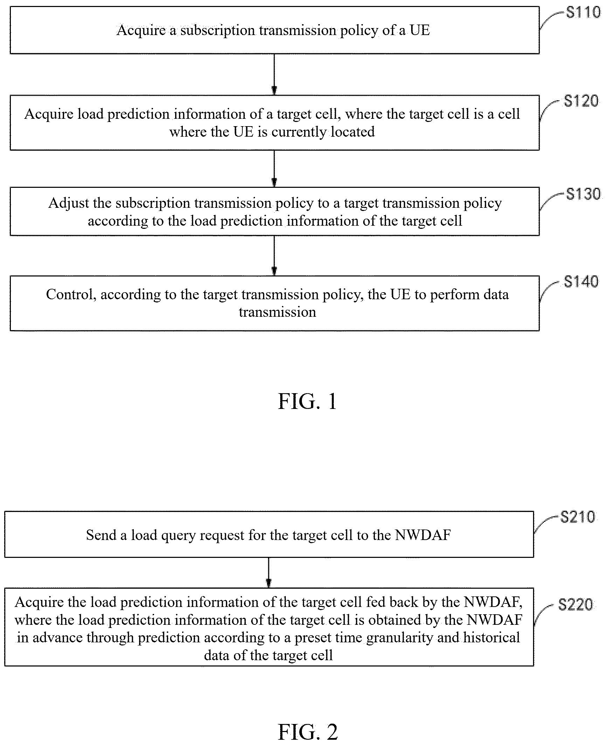

FIG. 1 is a flowchart of a transmission policy configuration method according to an embodiment of the present disclosure. The transmission policy configuration method includes, but not limited to, the following steps S110, S120, S130, and S140.

At S110, a subscription transmission policy of a UE is acquired.

It should be noted that the transmission policy of this embodiment may be a transmission policy for controlling any type of traffic, for example, a BDT policy for controlling a BDT data transmission of the UE. The data type corresponding to the transmission policy is not limited in this embodiment. For simplicity of description, the principle is described below using the BDT policy as an example.

It should be noted that the subscription transmission policy may be stored in a Unified Data Repository (UDR) or in other network elements having similar functions, and the storage mode of the subscription transmission policy is not limited in this embodiment.

It should be noted that the subscription transmission policy may include a data transmission policy set in advance for the UE, e.g., maximum allowed uplink and downlink bandwidths of the UE during data transmission, whether or not the setup of a dedicated bearer is allowed, etc. The specific content of the transmission policy is not limited in this embodiment.

At S 120, load prediction information of a target cell is acquired, where the target cell is a cell where the UE is currently located.

It should be noted that in related protocols, a BDT policy is generally determined according to current network performance of the cell. In the process of the UPF applying the BDT policy to control the UE to perform BDT transmission, the load of the cell may change. For example, at the time of acquiring the BDT policy, the load of the cell is low, and the BDT policy corresponds to a high bandwidth. With the arrival of peak hours, the load of the cell increases, and the UE is still controlled by the BDT policy. If the BDT data transmission is performed with high bandwidth in the case of high load of the cell, the burden of the cell will be increased. For another example, the BDT policy is acquired during peak hours, and is allocated with low bandwidth. As the peak hours pass, the load of the cell decreases. In this case, there is a large surplus of transmission resources, but the UE still performs BDT data transmission with low bandwidth, failing to fully utilize the transmission resources. In view of this, in this embodiment, the load prediction information is introduced to predict the load status of the target cell in a period of time in the future, and the BDT policy is adjusted based on the load prediction information, such that the BDT policy can conform to the load status of the target cell in the period of time in the future. This can effectively avoid increasing the burden of the cell when the cell load is high, and fully utilize transmission resources when the cell load is low.

It should be noted that the load prediction information represents the load status of the cell in the period of time in the future, and the specific time granularity may be adjusted to, for example, one day or several hours in the future according to actual demands, which is not limited in this embodiment. The load prediction information may be mapped to a congestion level. The load meaning represented by the congestion level may be determined according to actual demands. For example, congestion levels 1 to 5 may be defined in advance, where congestion level 1 is the highest level, representing that the load ratio of the target cell within a prediction granularity is 90% to 100%.

It should be noted that if load control is performed at the network slice level, the control range is large and generally covers multiple cells. If load statuses of the multiple cells differ greatly, the obtained BDT policy cannot take into account the BDT data transmission by the UE in each cell, leading to a unsatisfactory load control effect. Therefore, load control is performed at the cell level in this embodiment, i.e., at a granularity smaller than that of the load control at the slice level, so the requirements of the operator on the flexibility of the BDT policy can be well met, thereby improving the accuracy of load control.

At S130, the subscription transmission policy is adjusted to a target transmission policy according to the load prediction information of the target cell.

It should be noted that according to the description of the above embodiment, because the subscription transmission policy may specify transmission resources such as bandwidth that the UE is allowed to use, so the subscription transmission policy may be adjusted to obtain the target transmission policy after the load prediction information of the target cell is acquired. For example, maximum allowed uplink and downlink bandwidths of the UE are set in a subscribed BDT policy. When the load prediction information indicates a high congestion degree of the cell, uplink and downlink bandwidths of the UE are reduced according to a proportion or an adjustment value, and the UE is controlled to perform BDT data transmission with the reduced uplink and downlink bandwidths. For another example, when the load prediction information indicates a low congestion degree of the cell, the maximum uplink and downlink bandwidths specified in the subscribed BDT policy are used as a target BDT policy, and the UE is controlled to perform BDT data transmission with maximum allowable resources. With the above scheme, the set subscription transmission policy can be adjusted according to the future load of the cell, thereby improving the flexibility of the transmission policy.

At S140, the UE is controlled according to the target transmission policy to perform data transmission.

It should be noted that after the target transmission policy is determined, the process of controlling the UE to perform data transmission may be determined according to the specific type of data. For example, when the UE initiates a BDT transmission, an Access and Mobility Management Function (AMF) initiates a session creation request to a Session Management Function (SMF), the SMF sends a session policy creation request to a PCF, the PCF determines a target BDT policy and feeds the target BDT policy back to the SMF, the SMF transmits the target BDT policy to a UPF, and the UPF applies the target BDT policy to the target cell. After the UE initiates a BDT procedure, the UPF controls, according to the policy, the UE to perform BDT data transmission. The above process is merely an example of controlling, according to the target transmission policy the UE, to perform data transmission, and is not intended to limit usage scenarios of this embodiment.

In addition, in an embodiment, the transmission policy configuration method is applied to a PCF in communication connection with a Network Data Analytics Function (NWDAF). Referring to FIG. 2, S120 of the embodiment shown in FIG. 1 further includes, but not limited to, the following steps.

At S210, a load query request for the target cell is sent to the NWDAF.

At S220, the load prediction information of the target cell fed back by the NWDAF is acquired, where the load prediction information of the target cell is obtained by the NWDAF in advance through prediction according to a preset time granularity and historical data of the target cell.

It should be noted that the NWDAF can accept a request from another network element to subscribe or query a data analysis result, then collect data from other network elements that provide original data, perform analysis, statistics and prediction using a built-in artificial intelligence module, and finally output an analysis result to the network element initiating the subscription or query. Based on this, the NWDAF can collect historical data of the target cell from a network data source according to the preset time granularity, and predict the load prediction information of the target cell. When the PCF sends a load query request for the target cell to the NWDAF, the NWDAF feeds back the load prediction information of the corresponding time period to the PCF. The network data source may be a network element, a network management system, a big data system, or an Operation Administration and Maintenance (OAM) system for storing cell operation data. The historical data may be an uplink Physical Resource Block (PRB) utilization rate, a downlink PRB utilization rate, Central Processing Unit (CPU) usage, and the like of the cell in a period of time in the past, as long as the load status of the cell can be reflected. The NWDAF may obtain the load prediction information according to the historical data by using a time series prediction algorithm generally used in the industry. The source and data type of the historical data and the prediction method used by the NWDAF are not limited in this embodiment, and those having ordinary skills in the art have the motivation to determine the source and data type of the historical data and the prediction method used by the NWDAF by themselves according to actual situations.

It should be noted that in this embodiment, the PCF may subscribe to the NWDAF for load prediction information of one or more cells, which may be determined according to specific service scenarios. For example, the UE is a fixed device in a cell. When the UE needs to perform a BDT transmission, the PCF separately queries the NWDAF for load prediction information of the target cell, and then adjusts the target BDT policy. For another example, the UE is a device that moves among a plurality of cells, such as a bus. The PCF may subscribe to load prediction information of the plurality of cells in batches, such that the bus can adjust the BDT policy according to the load prediction information of the cell where the bus is currently located. As such, flexible BDT data transmission is realized.

It should be noted that to acquire the load prediction information of the target cell, the PCF may add identification information of the target cell to the load query request, such that the NWDAF can identify the specific cell. The details will not be described in this embodiment.

It should be noted that the preset time granularity may be adjusted according to actual demands. For example, for a cell whose load changes greatly in one day, the time granularity may be one hour, and for a cell whose load does not change greatly every day, the time granularity may be one day. Those having ordinary skills in the art can select an appropriate preset time granularity according to actual demands, which will not be described in detail in this embodiment.

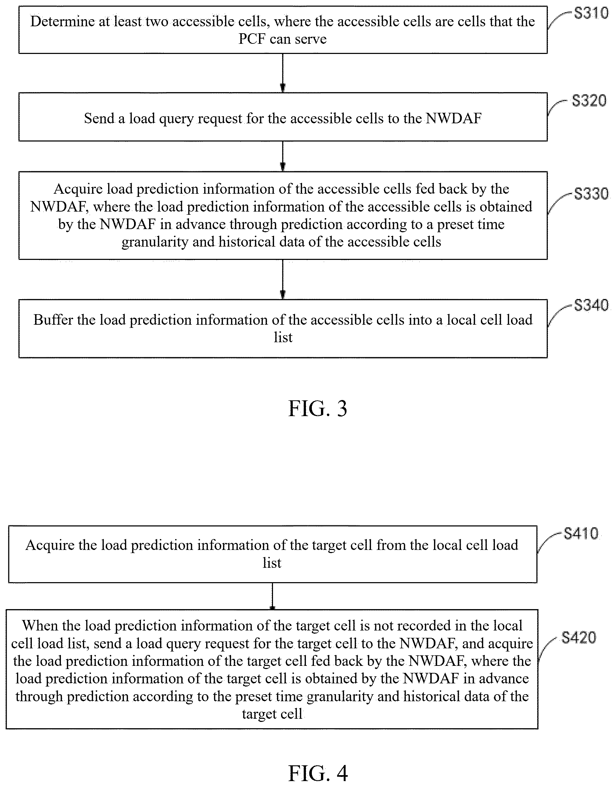

In addition, in an embodiment, referring to FIG. 3, before S120 in the embodiment shown in FIG. 1, the method further includes, but not limited to, the following steps.

At S310, at least two accessible cells are determined, where the accessible cells are cells that the PCF can serve.

At S320, a load query request for the accessible cells is sent to the NWDAF.

At S330, load prediction information of the accessible cells fed back by the NWDAF is acquired, where the load prediction information of the accessible cells is obtained by the NWDAF in advance through prediction according to a preset time granularity and historical data of the accessible cells.

At S340, the load prediction information of the accessible cells is buffered into a local cell load list.

It should be noted that generally one PCF may correspond to a plurality of cells, and if each cell queries load prediction information one by one, the number of messages between the PCF and the NWDAF will be increased, and more network bandwidth resources will be occupied. Therefore, the PCF may send a load query request for all accessible cells served by the PCF to the NWDAF, such that the NWDAF feeds back load prediction information of the plurality of accessible cells at a time. The PCF buffers the load prediction information of each accessible cell into a local cell load list, thereby saving network element resources. When initiating a BDT transmission, the UE may directly query the load prediction information from the local cell load list, thereby improving the response efficiency of the PCF. In addition, when the number of accessible cells is large, the load prediction information may be queried from the NWDAF in batches. The number of cell identities carried in the load query request may be adjusted according to actual demands.

It should be noted that the local cell load list may record load prediction information of a plurality of accessible cells, and may also record cell identities, a valid time period corresponding to the load prediction information, etc., for convenience of query, which is not limited herein.

In addition, in an embodiment, referring to FIG. 4, S120 in the embodiment shown in FIG. 1 further includes, but not limited to, a following step.

At S410, the load prediction information of the target cell is acquired from the local cell load list.

At S420, when the load prediction information of the target cell is not recorded in the local cell load list, a load query request for the target cell is sent to the NWDAF, and the load prediction information of the target cell fed back by the NWDAF is acquired, where the load prediction information of the target cell is obtained by the NWDAF in advance through prediction according to the preset time granularity and historical data of the target cell.

It should be noted that according to the description of the above embodiment, because the local cell load list records load prediction information of all cells corresponding to the PCF, the UE may directly query the load prediction information of the target cell from the local cell load list after initiating the transmission process, thereby shortening the response time of the PCF and improving the efficiency of policy deployment.

It should be noted that the load prediction information is for the preset time granularity. In a case where the load prediction information stored in the local cell load list have expired, or in a case where the load prediction information is queried from the NWDAF in batches and the load prediction information of the target cell has not been queried yet, the load prediction information of the target cell may be separately queried from the NWDAF according to the method described in the embodiment shown in FIG. 2 for adjustment of the target transmission policy.

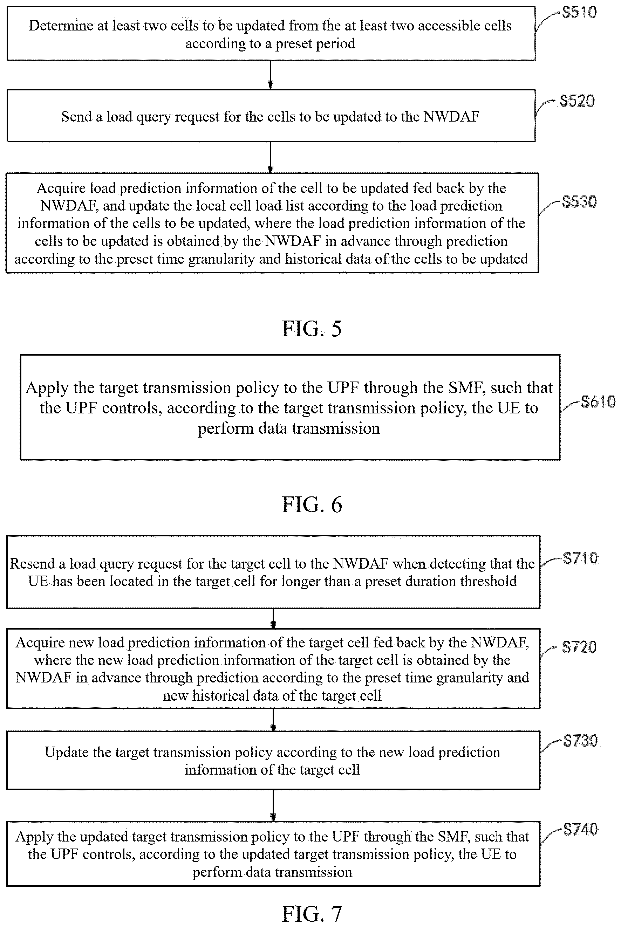

In addition, in an embodiment, referring to FIG. 5, after S340 in the embodiment shown in FIG. 3, the method further includes, but not limited to, the following steps.

At S510, at least two cells to be updated are determined from the at least two accessible cells according to a preset period.

At S520, a load query request for the cells to be updated is sent to the NWDAF.

At S530, load prediction information of the cells to be updated fed back by the NWDAF is acquired, and the local cell load list is updated according to the load prediction information of the cells to be updated, where the load prediction information of the cells to be updated is obtained by the NWDAF in advance through prediction according to the preset time granularity and historical data of the cells to be updated.

It should be noted that because the load prediction information is obtained through prediction based on the preset time granularity, the load prediction information is time-sensitive. The PCF may periodically update the load prediction information according to the preset period, to ensure the accuracy of the load prediction information. For the method of acquiring the load prediction information of the cells to be updated, reference may be made to the description of the above embodiments, and the details will not be repeated herein.

It should be noted that the specific value of the preset period can be set according to actual demands, as long as the moment when the load prediction information is acquired is used as a starting moment for timing. For example, in the above embodiment, the load prediction information of the accessible cells is acquired in batches, a first batch of load prediction information is acquired at a first moment, a second batch of load prediction information is acquired at a second moment, the first batch of load prediction information is updated after timing starting from the first moment according to the preset period is completed, and the second batch of load prediction information is updated after timing starting from the second moment according to the preset period is completed. This can effectively ensure that the information in the local cell load list is valid.

In addition, in an embodiment, the PCF is in communication connection with an SMF, the SMF is in communication connection with a UPF, and referring to FIG. 6, S140 in the embodiment shown in FIG. 1 further includes, but not limited to, a following step.

At S610, the target transmission policy is applied to the UPF through the SMF, such that the UPF controls, according to the target transmission policy, the UE to perform data transmission.

It should be noted that using BDT transmission as an example, when the UE initiates a BDT transmission, the SMF sends a session policy creation request to the PCF. After obtaining a target BDT policy according to a subscribed BDT policy and the load prediction information of the target cell that are acquired, the PCF adds the target BDT policy into a response to be returned to the SMF, such that the SMF applies the target BDT policy to the UPF, thereby implementing the transmission control on the UE. The subsequent process of policy deployment after the PCF acquires the target BDT policy is a technology well known to those having ordinary skills in the art, and will not be described in detail herein.

In addition, in an embodiment, referring to FIG. 7, after S610 in the embodiment shown in FIG. 6, the method further includes, but not limited to, the following steps.

At S710, a load query request for the target cell is resent to the NWDAF when detecting that the UE has been located in the target cell for longer than a preset duration threshold.

At S720, new load prediction information of the target cell fed back by the NWDAF is acquired, where the new load prediction information of the target cell is obtained by the NWDAF in advance through prediction according to the preset time granularity and new historical data of the target cell.

At S730, the target transmission policy is updated according to the new load prediction information of the target cell.

At S740, the updated target transmission policy is applied to the UPF through the SMF, such that the UPF controls, according to the updated target transmission policy, the UE to perform data transmission.

It should be noted that based on the description of the above embodiment, using BDT transmission as an example, the PCF may adjust the subscribed BDT policy to the target BDT policy according to the load prediction information of the cell. The load prediction information is time-sensitive. For example, using 15 minutes as the preset time granularity, when 15 minutes has elapsed since the application of the target BDT policy, load prediction information of the next 15 minutes needs to be acquired and used as a basis for further adjusting the target BDT policy, to ensure that the BDT policy can correctly reflect the cell load within the preset time granularity. The preset duration threshold may be adjusted according to actual demands as long as it is less than the preset duration threshold, which is not limited in this embodiment.

It should be noted that after the new load prediction information is acquired, whether to adjust the target transmission policy may be determined according to the load statuses before and after the update. For example, the load prediction information represents a congestion level. If the congestion levels before and after the update are the same, indicating the load of the cell does not change significantly, the current target BDT policy may be maintained. For another example, if the congestion levels before and after the update are different, it may be determined that the load status of the cell has changed, and the target BDT policy may be adjusted according to the new congestion level, such that the updated target BDT policy can well conform to the actual load of the cell, thereby improving the flexibility of the target BDT policy.

It should be noted that because the BDT policy is fed back to the SMF by the PCF through a response, the SMF may add an implicit subscription in the session policy creation request when the UE initiates the BDT process, such that after updating the target BDT policy, the PCF feeds back the updated target BDT policy to the SMF. The implicit subscription is a technology well known to those having ordinary skills in the art, and will not be described in detail herein.

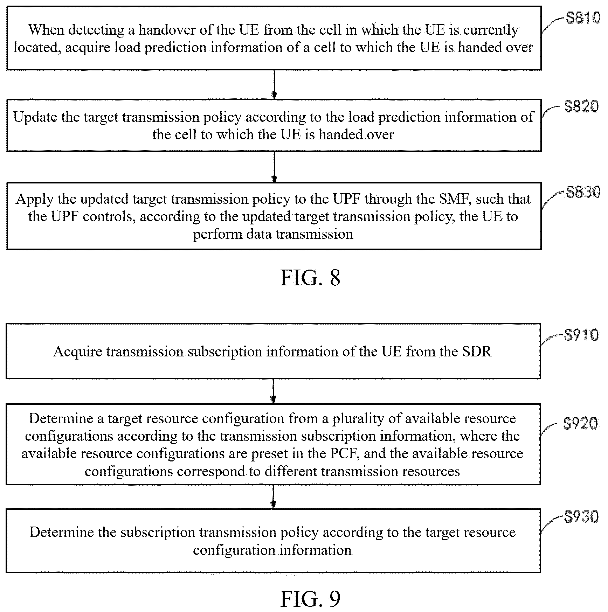

In addition, in an embodiment, referring to FIG. 8, after S610 in the embodiment shown in FIG. 6, the method further includes, but not limited to, the following steps.

At S810, when detecting a handover of the UE from the cell in which the UE is currently located, load prediction information of a cell to which the UE is handed over is acquired.

At S820, the target transmission policy is updated according to the load prediction information of the cell to which the UE is handed over.

At S830, the updated target transmission policy is applied to the UPF through the SMF, such that the UPF controls, according to the updated target transmission policy, the UE to perform data transmission.

It should be noted that when the UE is a mobile terminal, the UE is likely to be handed over from one cell to another during movement. The load prediction information is based on the historical data of the cell and is cell-specific. Therefore, after the UE is handed over to a new cell, a target transmission policy corresponding to the new cell needs to be acquired, to ensure that the UE can perform data transmission according to the target transmission policy that conforms to the load control of the new cell.

It should be noted that for the process of the PCF acquiring the load prediction information of the cell to which the UE is handed over after detecting a cell handover of the UE and the process of policy deployment, reference may be made to the description of the above embodiments, and the details will not be repeated herein.

In addition, in an embodiment, the PCF is in communication connection with a Subscription Data Repository (SDR), and referring to FIG. 9, S110 of the embodiment shown in FIG. 1 further includes, but not limited to, the following steps.

At S910, transmission subscription information of the UE is acquired from the SDR.

At S920, a target resource configuration is determined from a plurality of available resource configurations according to the transmission subscription information, where the available resource configurations are preset in the PCF, and the available resource configurations correspond to different transmission resources.

At S930, the subscription transmission policy is determined according to the target resource configuration information.

It should be noted that the SDR is a network element with a built-in UDR, and can be used as a 5GC UDR or used as a WEB server or application server. The operator may add user subscription data through a client installed in the SDR. As such, the transmission policy of the UE is based on the subscription data and does not need to be negotiated through an Application Function (AF). Therefore, the process is highly controllable and meets the operator's needs.

It should be noted that the transmission subscription information may include information of the UE, and may also include an identifier of subscription information, for example, a package serial number. Using BDT transmission as an example, a plurality of available resource configurations are configured in the PCF, e.g., maximum allowed uplink and downlink bandwidths of the UE during data transmission, whether or not the setup of a dedicated bearer is allowed, etc. Each available resource configuration corresponds to a unique BDT package serial number. After acquiring the transmission subscription information of the UE from the SDR, the PCF determines a target resource configuration from the available resource configurations according to the package serial number in the transmission subscription information, determines the target resource configuration as a subscribed BDT policy corresponding to the UE, and then performs subsequent steps to determine the target BDT policy.

Four examples are given below to better illustrate the technical scheme of the embodiments of the present disclosure. In the following examples, the BDT policy is used as an example of the transmission policy.

### Example One:

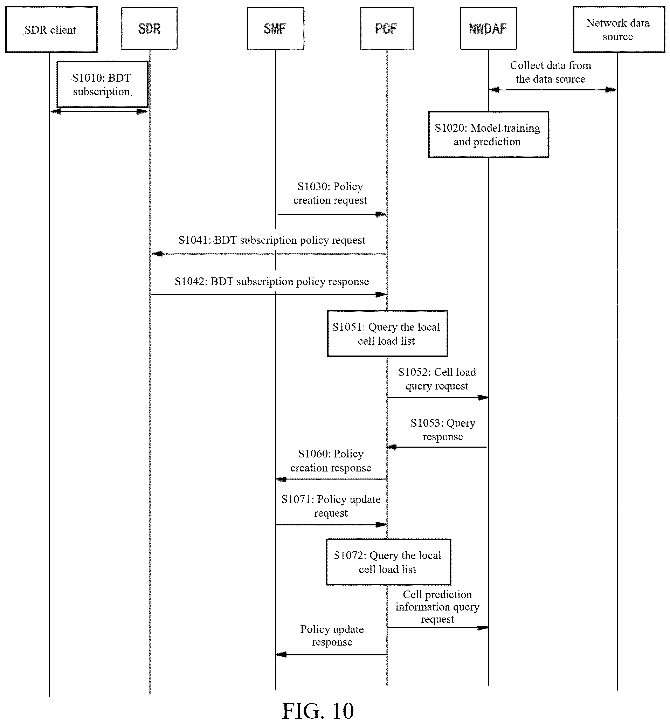

Referring to FIG. 10, Example One includes, but not limited to, the following steps.

At S1010, subscription data is inputted to an SDR through an SDR client, where the subscription data includes a BDT package, and BDT policies corresponding to different BDT packages are configured in a PCF.

At S1020, an NWDAF collects historical load data of all cells in the current area from a network data source, performs model training and prediction using an artificial intelligence algorithm, and obtains load prediction information of all the cells in a period of time in the future, where the historical load data includes an uplink PRB utilization ratio, a downlink PRB utilization ratio, and CPU usage.

At S1030, a UE that has subscribed to a BDT package initiates a service, and an SMF sends a session policy creation request to the PCF.

At S1041, the PCF acquires BDT subscription information from the SDR.

At S1042, the SDR returns a response carrying subscription information, and the PCF reads content of a locally configured package according to a BDT package serial number in the subscription information, and determines a subscribed BDT policy.

At S1051, the PCF queries a local cell load list.

At S 1052, when load prediction information of a cell accessed by the UE is not found in the local cell load list, the PCF sends a query request to the NWDAF to query load prediction information of the cell with a granularity of 15 minutes starting from the current moment.

At S1053, the NWDAF sends a query response to the PCF according to historical load prediction information of the cell, where the query response carries a congestion level mapped to the load prediction information of the cell.

At S1060, the PCF adjusts the subscribed BDT policy to a target BDT policy according to the congestion level returned by the NWDAF, and feeds back a session policy creation response carrying the target BDT policy to the SMF.

At S1071, when the UE moves to a new cell, the SMF sends a session policy update request to the PCF.

At S1072, the PCF queries the local cell load list, and if load prediction information of the new cell at the current time granularity is found in the local cell load list, sends a session policy update response carrying the updated BDT policy to the SMF. If no load prediction information of the new cell is found in the local cell load list, the PCF performs the S1052 again to query load prediction information from the NWDAF.

Example Two: Based on Example One, in Example Two, the PCF has queried the load prediction information of the cell from the NWDAF and buffered the load prediction information of the cell.

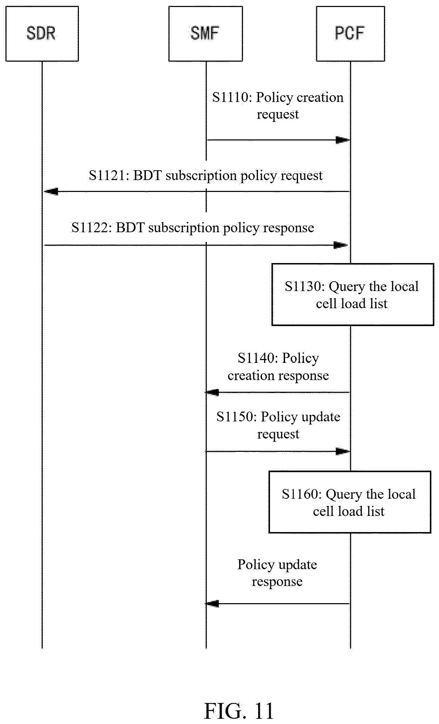

Referring to FIG. 11, Example Two includes, but not limited to, the following steps.

At S1110, a UE initiates a BDT process, and the SMF sends a session policy creation request to the PCF.

At S1121, the PCF acquires BDT subscription information from the SDR.

At S1122, the SDR returns a response carrying subscription information, and the PCF determines a subscribed BDT policy according to the subscription information.

At S1130, the PCF queries a local cell load list.

At S1140, the PCF finds load prediction information of a cell accessed by the UE at the current time granularity from the local cell load list, adjusts the subscribed BDT policy to a target BDT policy according to the load prediction information, and sends a session policy creation response carrying the target BDT policy to the SMF.

At S1150, when the UE moves to a new cell, the SMF sends a session policy update request to the PCF.

At S1160, the PCF queries the local cell load list, and if load prediction information of the new cell at the current time granularity is still found in the local cell load list, sends a session policy update response carrying the updated BDT policy to the SMF.

Example Three: In this example, BDT subscription data is stored in advance in the SDR, and NWDAF has acquired data from the network data source and completed load prediction.

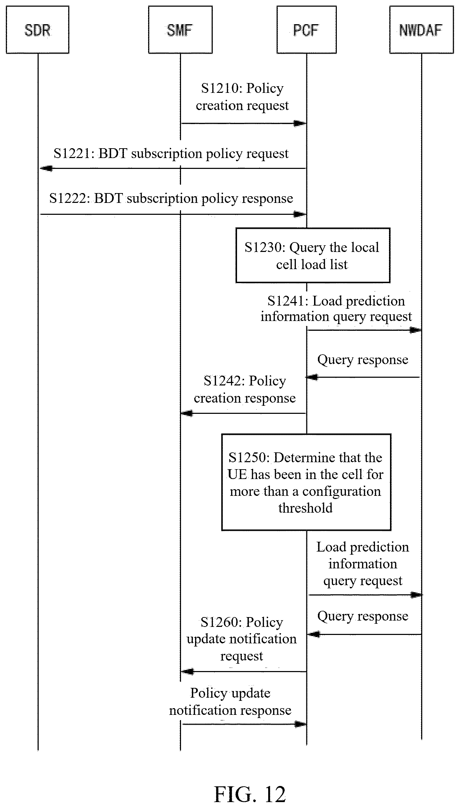

Referring to FIG. 12, Example Three includes, but not limited to, the following steps.

At S1210, a UE initiates a BDT process, and the SMF sends a session policy creation request carrying an implicit subscription to the PCF.

At S1221, the PCF acquires BDT subscription information from the SDR.

At S1222, the SDR returns a response carrying subscription information, and the PCF determines a subscribed BDT policy according to the subscription information.

At S1230, the PCF queries the local cell load list. If load prediction information of the cell at the current time granularity is found in the local cell load list, S1242 is executed; otherwise, S1241 is executed.

At S1241, the PCF initiates a query to the NWDAF to acquire load prediction information fed back by the NWDAF.

At S 1242, the PCF obtains a target BDT policy according to the load prediction information and the subscribed BDT policy, and sends a session policy creation response carrying the target BDT policy to the SMF.

At S1250, the PCF determines that the UE has been in the cell for more than a configuration threshold, and queries the NWDAF for load prediction information of the cell within a new time granularity, and the NWDAF returns a query response carrying corresponding data.

At S1260, the PCF sends a policy update notification request carrying a new BDT policy to the SMF based on the implicit subscription created by the SMF, and the SMF returns a notification response and applies the new policy to the UPF.

Example Four: Example Four shows steps following Example One, i.e., steps after the PCF has queried the load prediction information of the cell from the NWDAF and buffered the load prediction information of the cell.

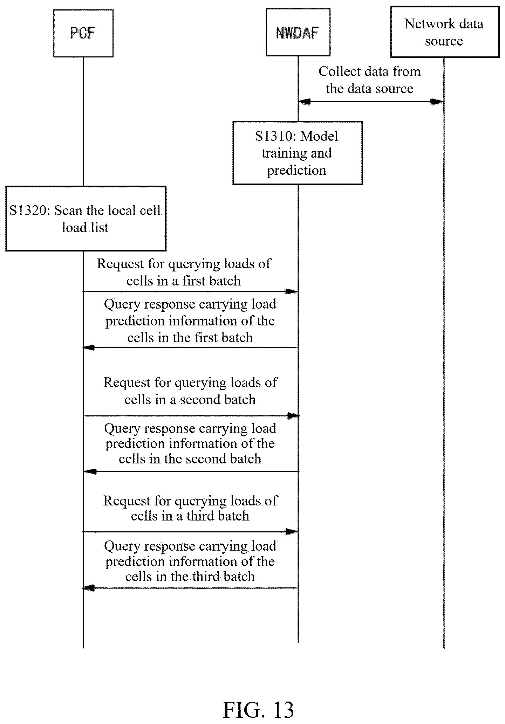

Referring to FIG. 13, Example Four includes, but not limited to, the following steps.

At S1310, the NWDAF collects historical load data of all cells in the current area from the network data source, performs model training and prediction using an artificial intelligence algorithm, and obtains load prediction information of all the cells in a period of time in the future.

At S1320, the PCF periodically scans the local cell load list in a timer-triggered manner, and initiates a load prediction query request for the cells in the list to the NWDAF in batches, where the request carries information of cells in a batch; the NWDAF sends a query response carrying load prediction information of the cells in the current batch according to a previous prediction result. After receiving the new load prediction information, the PCF deletes the invalid data that has expired. When the timer is triggered next time, the PCF continues to query load prediction information of a next cell from the NWDAF. After the query of the load prediction information of all the cells is completed, the PCF starts scanning from a starting position of the cell load list.

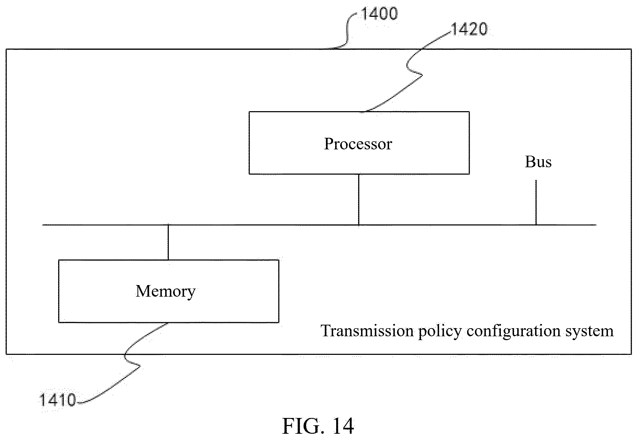

In addition, referring to FIG. 14, an embodiment of the present disclosure provides a transmission policy configuration system 1400, including a memory 1410, a processor 1420, and a computer program stored in the memory 1410 and executable by the processor 1420.

The processor 1420 and the memory 1410 may be connected by a bus or in other ways.

The non-transitory software program and instructions required to implement the transmission policy configuration method of the foregoing embodiments are stored in the memory 1410 which, when executed by the processor 1420, cause the processor 1420 to perform the transmission policy configuration method of the foregoing embodiments, for example, implement the method steps S110 to S140 in FIG. 1, the method steps S210 to S220 in FIG. 2, the method steps S310 to S340 in FIG. 3, the method steps S410 to S420 in FIG. 4, the method steps S510 to S530 in FIG. 5, the method step S610 in FIG. 6, the method steps S710 to S740 in FIG. 7, the method steps S810 to S830 in FIG. 8, the method steps S910 to S930 in FIG. 9, the method steps S1010 to S1072 in FIG. 10, the method steps S1110 to S1160 in FIG. 11, the method steps S1210 to S1260 in FIG. 12, or the method steps S1310 to S1320 in FIG. 13.

The apparatus embodiments described above are merely examples. The units described as separate components may or may not be physically separated, i.e., they may be located in one place or may be distributed over a plurality of network units. Some or all of the modules may be selected according to actual needs to achieve the purposes of the scheme of this embodiment.

In addition, an embodiment of the present disclosure provides a computer-readable storage medium, storing a computer-executable instruction which, when executed by a processor or controller, for example, by a processor in the transmission policy configuration system embodiment described above, may cause the processor to perform the transmission policy configuration method of the foregoing embodiments, for example, implement the method steps S110 to S140 in FIG. 1, the method steps S210 to S220 in FIG. 2, the method steps S310 to S340 in FIG. 3, the method steps S410 to S420 in FIG. 4, the method steps S510 to S530 in FIG. 5, the method step S610 in FIG. 6, the method steps S710 to S740 in FIG. 7, the method steps S810 to S830 in FIG. 8, the method steps S910 to S930 in FIG. 9, the method steps S1010 to S1072 in FIG. 10, the method steps S1110 to S1160 in FIG. 11, the method steps S1210 to S1260 in FIG. 12, or the method steps S1310 to S1320 in FIG. 13.

The embodiments of the present disclosure include: acquiring a subscription transmission policy of a UE; acquiring load prediction information of a target cell, where the target cell is a cell where the UE is currently located; adjusting the subscription transmission policy to a target transmission policy according to the load prediction information of the target cell; and controlling, according to the target transmission policy, the UE to perform data transmission. According to the technical scheme of this embodiment, the transmission policy can be adjusted according to the load prediction information of the cell to prevent the UE from performing high-bandwidth data transmission in a high-load cell, thereby improving the flexibility of the transmission policy and balancing the load of base stations of different cells.

Those having ordinary skills in the art can understand that all or some of the steps in the methods disclosed above and the functional modules/units in the system and the apparatus can be implemented as software, firmware, hardware, and appropriate combinations thereof. Some or all physical components may be implemented as software executed by a processor, such as a central processing unit, a digital signal processor, or a microprocessor, or as hardware, or as an integrated circuit, such as an application-specific integrated circuit. Such software may be distributed on a computer-readable medium, which may include a computer storage medium or non-transitory medium and a communication medium or transitory medium. As is known to those having ordinary skills in the art, the term "computer storage medium" includes volatile and nonvolatile, removable and non-removable media implemented in any method or technology for storage of information (such as computer-readable instructions, data structures, program modules, or other data). The computer storage medium includes, but not limited to, a Random Access Memory (RAM), a Read-Only Memory (ROM), an electrically erasable programmable Read-Only Memory (EEPROM), a flash memory or other memory technology, a Compact Disc Read-Only Memory (CD-ROM), a Digital Versatile Disc (DVD) or other optical storage, a cassette, a magnetic tape, a magnetic disk storage or other magnetic storage device, or any other medium which can be used to store the desired information and can be accessed by a computer. In addition, as is known to those having ordinary skills in the art, the communication medium typically includes computer-readable instructions, data structures, program modules, or other data in a modulated data signal such as a carrier or other transport mechanism, and can include any information delivery medium.

## Claims

1. A transmission policy configuration method, comprising:
acquiring a subscription transmission policy of a User Equipment (UE);
acquiring load prediction information of a target cell, wherein the target cell is a cell where the UE is currently located;
adjusting the subscription transmission policy to a target transmission policy according to the load prediction information of the target cell; and
controlling, according to the target transmission policy, the UE to perform data transmission.

2. The method of claim 1, wherein the method is applied to a Policy Control Function (PCF) in communication connection with a Network Data Analytics Function (NWDAF), and acquiring load prediction information of a target cell comprises:
sending a load query request for the target cell to the NWDAF; and
acquiring the load prediction information of the target cell fed back by the NWDAF, wherein the load prediction information of the target cell is obtained by the NWDAF in advance through prediction according to a preset time granularity and historical data of the target cell.

3. The method of claim 1, wherein the method is applied to a PCF in communication connection with an NWDAF, and before acquiring load prediction information of a target cell, the method further comprises:
determining at least two accessible cells, wherein the accessible cells are cells that the PCF can serve;
sending a load query request for the accessible cells to the NWDAF;
acquiring load prediction information of the accessible cells fed back by the NWDAF, wherein the load prediction information of the accessible cells is obtained by the NWDAF in advance through prediction according to a preset time granularity and historical data of the accessible cells; and
buffering the load prediction information of the accessible cells into a local cell load list.

4. The method of claim 3, wherein acquiring load prediction information of a target cell comprises:
acquiring the load prediction information of the target cell from the local cell load list;
or
in response to the load prediction information of the target cell being not recorded in the local cell load list, sending a load query request for the target cell to the NWDAF, and acquiring the load prediction information of the target cell fed back by the NWDAF, wherein the load prediction information of the target cell is obtained by the NWDAF in advance through prediction according to the preset time granularity and historical data of the target cell.

5. The method of claim 3, wherein after buffering the load prediction information of the at least two of the accessible cells fed back by the NWDAF into a local cell load list, the method further comprises:
determining at least two cells to be updated from the at least two accessible cells according to a preset period;
sending a load query request for the cells to be updated to the NWDAF; and
acquiring load prediction information of the cells to be updated fed back by the NWDAF, and updating the local cell load list according to the load prediction information of the cells to be updated, wherein the load prediction information of the cells to be updated is obtained by the NWDAF in advance through prediction according to the preset time granularity and historical data of the cells to be updated.

6. The method of any of claims 2 to 5, wherein the PCF is in communication connection with a Session Management Function (SMF), the SMF is in communication connection with a User Plane Function (UPF), and controlling, according to the target transmission policy, the UE to perform data transmission comprises:
applying the target transmission policy to the UPF through the SMF, such that the UPF controls, according to the target transmission policy, the UE to perform data transmission.

7. The method of claim 6, wherein after applying the target transmission policy to the UPF through the SMF, the method further comprises:
resending a load query request for the target cell to the NWDAF in response to detecting that the UE has been located in the target cell for longer than a preset duration threshold;
acquiring new load prediction information of the target cell fed back by the NWDAF, wherein the new load prediction information of the target cell is obtained by the NWDAF in advance through prediction according to the preset time granularity and new historical data of the target cell;
updating the target transmission policy according to the new load prediction information of the target cell; and
applying the updated target transmission policy to the UPF through the SMF, such that the UPF controls, according to the updated target transmission policy, the UE to perform data transmission.

8. The method of claim 6, wherein after applying the target transmission policy to the UPF through the SMF, such that the UPF controls, according to the target transmission policy, the UE to perform data transmission, the method further comprises:
in response to detecting a handover of the UE from the cell in which the UE is currently located, acquiring load prediction information of a cell to which the UE is handed over; and
updating the target transmission policy according to the load prediction information of the cell to which the UE is handed over; and
applying the updated target transmission policy to the UPF through the SMF, such that the UPF controls, according to the updated target transmission policy, the UE to perform data transmission.

9. The method of claim 1, wherein the method is applied to a PCF in communication connection with a Subscription Data Repository (SDR), and acquiring a subscription transmission policy of a UE comprises:
acquiring transmission subscription information of the UE from the SDR;
determining a target resource configuration from a plurality of available resource configurations according to the transmission subscription information, wherein the available resource configurations are preset in the PCF, and the available resource configurations correspond to different transmission resources; and
determining the subscription transmission policy according to the target resource configuration information.

10. A transmission policy configuration system, comprising: a memory, a processor, and a computer program stored in the memory and executable by the processor, wherein the computer program, when executed by the processor, causes the processor to perform the transmission policy configuration method of any of claims 1 to 9.

11. A computer-readable storage medium, storing a computer-executable instruction which, when executed by a processor, causes the processor to perform the transmission policy configuration method of any of claims 1 to 9.
